## Europäisches Patentamt
## European Patent Office
## Office européen des brevets

(11) Veröffentlichungsnummer: **0 107 760**
**B1**

(12) **EUROPÄISCHE PATENTSCHRIFT**

(45) Veröffentlichungstag der Patentschrift: **02.03.88**

(51) Int. Cl.⁴: **H 04 N 5/10**

(21) Anmeldenummer: **83107838.1**

(22) Anmeldetag: **09.08.83**

(54) Verfahren zum Einleiten des vertikalen Rücklaufs eines Elektronenstrahls.

(30) Priorität: **01.10.82 DE 3236411**

(43) Veröffentlichungstag der Anmeldung:
**09.05.84 Patentblatt 84/19**

(45) Bekanntmachung des Hinweises auf die
Patenterteilung:
**02.03.88 Patentblatt 88/09**

(84) Benannte Vertragsstaaten:
**BE FR GB IT NL SE**

(56) Entgegenhaltungen:
**DE-A-2 228 601**
**US-A-4 134 046**

**R.C.A. TECHNICAL NOTES, no. 1310, August
1982, Seiten 1-2, Princeton, New Jersey, US;
W.S. PIKE: "Vertical synch detector"**

(73) Patentinhaber: **Deutsche Thomson-Brandt
GmbH
Hermann-Schwer-Strasse 3 Postfach 2060
D-7730 Villingen-Schwenningen (DE)**

(72) Erfinder: **Hartmann, Uwe
Tallardstrasse 15
D-7730 Villingen-Schwenningen (DE)**
Erfinder: **Mai, Udo
Mühleschweg 2
D-7730 VS-Tannheim (DE)**

Courier Press, Leamington Spa, England.

## Beschreibung

### Stand der Technik

Die Erfindung geht aus von einem Verfahren zum Einleiten des vertikalen Rücklaufs eines Elektronenstrahls in einer Katodenstrahlröhre.

Es ist bekannt, den Elektronenstrahl mit Hilfe einer Ablenkschaltung abzulenken, die aus einem Oszillator besteht zur Erzeugung einer linear ansteigenden Sägezahnspannung, welcher eine Endstufe ansteuert, die den für die Ablenkung des Elektronenstrahls erforderlichen Strom liefert. Ist der Elektronenstrahl am unteren Bildrand angekommen, muß er wieder nach oben gebracht werden, wozu der Oszillator durch einen aus dem Sendesignal gewonnenen Synchronsignal getriggert wird. Handelt es sich bei der Endstufe um eine herkömmliche Analogstufe, z.B. um eine Transistor-Gegentakt-B-Endstufe, so kann diese zu jedem beliebigen Zeitpunkt in den Rücklauf gestartet werden, so daß bezüglich des Zeilensprungs keine Probleme auftreten. Es muß für einen exakten Zeilensprung in diesem Fall nur gewährleistet sein, daß von Halbbild zu Halbbild der Triggereinsatzpunkt um die Dauer einer halben Zeilenperiode verschoben eingeleitet wird, wobei es hier nicht auf den exakten Zeitpunkt sondern nur auf den genauen Zeitunterschied ankommt. In neueren Schaltungen besteht die Endstufe aus einem oder mehreren elektronischen Schaltern, die zeilenfrequent mittels vertikalfrequent in iher Breite modulierten Impulsen eingeschaltet und durch den Zeilenrückschlagimpuls jeweils wieder abgeschaltet werden. Diese Schalter bestehen z.B. aus Thyristoren, welchen jeweils eine Diode parallelgeschaltet ist. Dieser elektronische Schalter liegt zum Beispiel in Serie zu einer Wicklung des Zeilentransformators, der als Generator zur Lieferung der Ablenkleistung dient. In Serie mit dieser Wicklung ist ein integrierendes Netzwerk geschaltet, an welches die Ablenkwicklung angeschlossen ist. Der elektronische Schalter wird durch zeilenfrequente Impulse, die in Abhängigkeit von der in vertikaler Richtung verlaufenden Ablenkung in ihrer Breite moduliert sind, gesteuert. Die Ablenkung des Elektronenstrahls erfolgt dabei in der Weise, daß am oberen Bildrand nur ein durch die Paralleldiode fließender Strom durch die Ablenkspule den Elektronenstrahl ablenkt. Dieser Diodenstrom wird im Laufe der vertikalen Ablenkung fortschreitend durch einen entgegengesetzten Strom durch den Thyristor kompensiert, indem während der zweiten Hälfte der horizontalen Ablenkung von Zeile zu Zeile die den Thyristor öffnenden Impulse schrittweise vergrößert werden. Jeweils am Zeilenende wird der Thyristorstrom durch den negativ gerichteten Zeilenrücklaufimpuls unterbrochen.

Bei der zuvor beschriebenen Ablenkschaltung bestehen jedoch Probleme bezüglich eines exakten Zeilensprungs. Da die für derartige Ablenkschaltungen vorgesehenen Schalter jeweils nur am Ende einer Zeile abgeschaltet werden, bleiben diese bis zum Ende einer Zeile durchgeschaltet, wenn sie auch nur kurzzeitig vorher eingeschaltet wurden.

Wenn nun am unteren Bildrand der Elektronenstrahl bei dem einen Halbbild nur bis zur Zeilenmitte abgelenkt werden soll, damit nach dem Bildwechsel ein exakter Zeilensprung auftritt, muß verhindert werden, daß dieser Schalter während der letzten Zeile überhaupt eingeschaltet wird, da—wie gesagt—der Schalter erst am Zeilenende abgeschaltet wird.

Der Elektronenstrahl wird demzufolge weiter abgelenkt als es dem Analogsignal entspricht. Durch den dadurch bedingten größeren gespeicherten Energieinhalt wird der Elektronenstrahl nach dem Rücklauf an den oberen Bildrand mit zu großer Amplitude abgelenkt. Dadurch entsteht am oberen Bildrand ein schlechter Zeilensprung für etwa ein sechstel der Bildablenkperiode bis die Regelschleife der Ablenkschaltung diesen Amplitudenfehler wieder ausgeglichen hat. Das bedeutet, daß dann der Zeilensprung nicht mehr exakt verläuft. Zwar kann der entstandene Fehler durch eine Gegenkopplung etwas gemildert werden, doch vergeht hierzu wegen der geringen Schleifenverstärkung eine gewisse Zeit, während der am oberen Bildrand ein schlechtes Zeilensprungverhalten feststellbar ist.

In der US—Patentschrift 4 134 046 wird eine mit Zeilenfrequenz geschaltete Vertikalablenkschaltung beschrieben, bei der zwei elektronische Schalter mit impulsbreitenmodulierten Signalen angesteuert werden. Der Impulsbreitenmodulator wird dabei zusammen mit einem für den Rücklauf vorgesehenen Dunkeltastgenerator aus einer gemeinsamen Quelle angesteuert. Die Schaltung besitzt die Eigenschaft zeitlicher Verzögerungen zwischen dem erzeugten Sägezahnsignal und dem daraus erzeugten vertikalfrequenten Ablenkstrom in Abhängigkeit von der verwendeten Ablenkeinheit und der Größe des Bildschirmes. Mit Hilfe dieser Schaltung ist es möglich, eine einzige Steuerschaltung für eine Vielfalt von Fernzehablenkeinheiten bzw. Bildrohrarten zu zu erhalten. Dazu sind Mittel vorgesehen, mit deren Hilfe der Übergang, welcher die Einleitung des Austastimpulses gegenüber dem Synchronimpuls bestimmt, verzögert wird, so daß bei den verschiedenen Ablenkkonzepten der Tastimpuls mit dem Ablenksignal in Einklang gebracht wird.

### Aufgabe

Der Erfindung liegt deshalb die Aufgabe zugrunde, dieses schlechte Zeilensprungverhalten bei zeilenfrequent geschalteten Ablenkschaltungen zu beseitigen. Diese Aufgabe wird bei einer Schaltungsanordnung der im Oberbegriff des Patentanspruchs angegebenen Art durch die im Kennzeichen angegebenen Maßnahmen gelöst.

Die Erfindung bringt den Vorteil, daß der Rücklauf während des Vertikalsynchronimpulses exakt in Zeilenmitte bzw. am Zeilenende erfolgt. Er is unabhängig von einstellbaren und sich ändernden Ansprechschwellen des Triggereinsatzpunktes.

Beschreibung

Nachstehend soll an einem Ausführungsbeispiel das Wesentliche des angemeldeten Verfahrens erläutert werden. Hierbei beschränkt sich die Idee nicht auf die angegebene Schaltung. Es sind auch andere Möglichkeiten zur Erzeugung des erforderlichen Impulses denkbar, insbesondere in integrierter Schaltungstechnik.

Figur 1 zeigt eine Schaltung zur Durchführung des angemeldeten Verfahrens in einem Blockschaltbild.

Figur 2 zeigt die sich an den gekennzeichneten Punkten der Figur 1 ergebenden Signale.

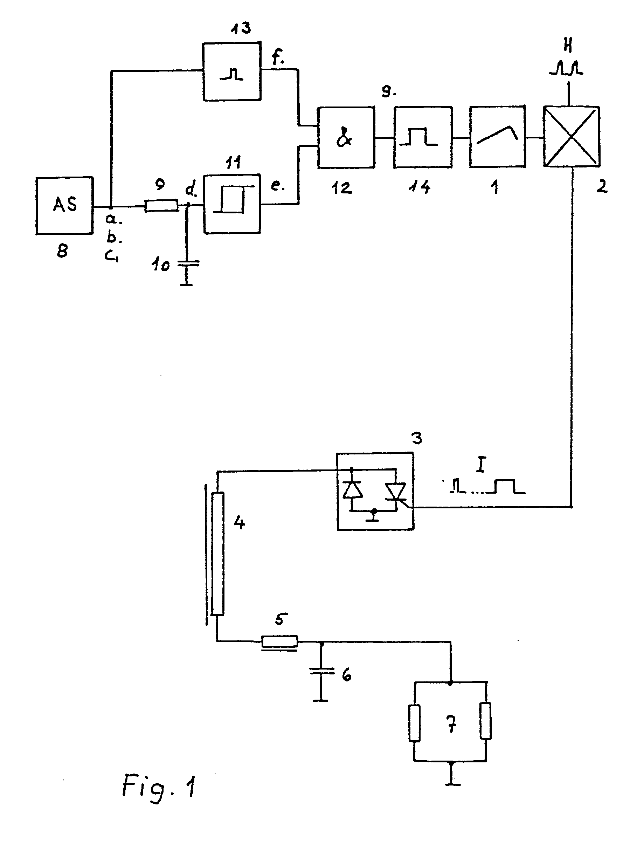

In Figur 1 ist eine bekannte Vertikalablenkschaltung im Prinzip dargestellt. Ein Sägezahngenerator 1 erzeugt mit Hilfe eines von zeilenfrequenten Impulsen H getakteten Modulators 2 zeilenfrequente Schaltimpulse, die rasterfrequent in ihrer Breite moduliert sind. Sie sind zu Beginn der Vertikalablenkperiode schmal und werden schrittweise vergrößert. Diese Impulse I steuern den elektronischen Schalter 3, so daß Ablenkenergie aus der Zeilentransformatorwicklung 4 über ein integrierendes Netzwerk 5, 6 an die Vertikalablenkwicklung 7 gelangt.

Der Generator 1 wird nach dem angemeldeten Verfahren exakt in Zeilenmitte und am Zeilenende getriggert. Dies kann auf nachfolgend beschriebene Weise geschehen.

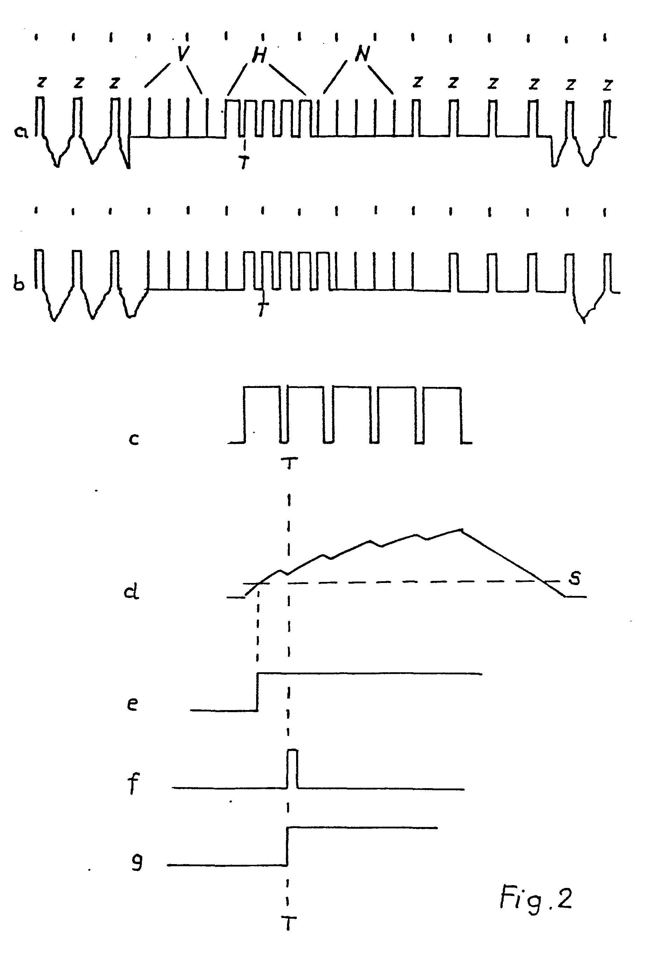

Bekanntlich wird der Bildrücklauf durch die sogenannten Vortrabanten V am Ende des Bildhinlaufs vorbereitet. Es folgen die zur Erzeugung des Bildrücklaufimpulses vorgesehenen Haupttrabanten H, auf welche Nachtrabanten N folgen. Die Trabanten V, H und N besitzen die doppelte Zeilenfrequenz. Wie aus Figur 2a und Figur 2b ersichtlich, liegen die Trabanten je nach Halbbild um eine halbe Zeilenperiodendauer versetzt. Diese von der Fernsehnorm vorgeschriebene Maßnahme sorgt für einen exakten Zeilensprung, der jedoch bei Vertikalablenkschaltungen, die zeilenfrequent geschaltete Endstufen verwenden, auf Schwierigkeiten stößt. Die vom Amplitudensieb 8 abgezweigten Haupttrabanten H nach Figur 2c werden über ein Integrierglied 9, 10 zu einem Bildsynchronimpuls umgeformt (Figur 2d). In einem Schmitt-Trigger 11 mit einstellbarer Schwelle S wird ein Impuls, Figur 2e erzeugt, der ein Und-Glied 12 vorbereitet. Über eine monostabile Kippstufe 13 werden kurze Impulse erzeugt, Figur 2f, die über das Und-Glied 12 eine weitere monostabile Kippstufe 14 triggern. Da die maßgebliche ansteigende Flanke der Haupttrabanten H zum Zeitpunkt T je nach Halbbild in Zeilenmitte oder am Zeilenende auftritt, wird ein den Rücklauf einleitender Impuls, Figur 3b, erzeugt, der—wie erforderlich—zum richtigen Zeitpunkt erscheint.

## Patentanspruch

Verfahren zur Einleitung des vertikalen Rücklaufs eines Elektronenstrahls in einer Kathodenstrahlröhre, bei dem der vertikale Ablenkstrom mit Hilfe eines elektronischen Schalters erzeugt wird, der eine Wicklung des Zeilentransformators als Generator über ein integrierendes Netzwerk in Reihe zu der Vertikalablenkwicklung schaltet, bei dem der Schalter durch in ihrer Breite bildfrequent modulierte, zeilenfrequente Impulse eingeschaltet und durch den Zeilenrückschlagimpuls abgeschaltet wird, und bei dem ein modulierender Sägezahngenerator den vertikalren Rücklauf durch Impulse einleitet, die aus dem Bildsynchronimpuls abgeleitet und von Halbbild zu Halbbild um die Dauer einer halben Zeilenperiode gegeneinander verschoben sind, dadurch gekennzeichnet, daß von dem Bildsynchronimpuls (d) jeweils ein Impuls (g) abgeleitet wird, der für das eine Halbbild mit der Zeilenmitte und für das andere Halbbild mit dem Zeilenende zusammenfällt, wobei der abgeleitete Impuls (g) aus dem Bildsynchronimpuls (d) durch eine logische Verknüpfung mit einem Impulssignal mit doppelter Zeilenfrequenz (c) erzeugt wird, der den Sägezahngenerator (1) triggert.

## Revendication

Procédé pour déclencher le retour vertical d'un faisceau d'électrons dans un tube cathodique, et selon lequel un courant vertical de déviation est produit à l'aide d'un interrupteur électronique, et qui branche un enroulement du transformateur de balayage de lignes, formant générateur, en série avec l'enroulement de balayage vertical, par l'intermédiaire d'un réseau réalisant une intégration, et selon lequel l'interrupteur est placé à l'état conducteur par des impulsions possédant la fréquence du balayage de lignes et dont la durée est modulée par la fréquence d'images, et est placé à l'état bloqué au moyen de l'impulsion de retour horizontal, et selon lequel un générateur de signaux en dents de scie, qui réalise une modulation, déclenche le retour vertical au moyen d'impulsions qui sont dérivées de l'impulsion de synchronisation d'images et sont décalées, d'une trame à la suivante, d'une durée égale à la demi-période du balayage de lignes, caractérisé par le fait qu'à partir de l'impulsion (d) de synchronisation d'images on dérive une impulsion respective (g), qui coïncide avec le milieu d'une ligne pour une trame et avec l'extrémité de la ligne pour l'autre trame, l'impulsion dérivée (g) étant produite à partir de l'impulsion (d) de synchronisation d'images, par combinaison logique avec un signal impulsionnel, qui possède une fréquence (c) double de la fréquence de balayage de lignes et déclenche le générateur de signaux en dents de scie (1).

## Claim

A method of initiating the vertical return of an electron beam in a cathode ray tube, in which the vertical deflection current is produced with the aid of an electronic switch which connects a winding of the line transformer as a generator in series with the vertical deflection winding via an integrating network, in which the switch is switched on at line frequency by pulses which are modulated in width at image frequency and switched off by the line fly back pulse, and in which a modulating saw tooth generator initiates the vertical return by means of pulses, which are derived from the image synchronous pulse and are shifted in relation to one another from one half image to the next by the duration of half a line period, characterised in that a pulse (g) is derived in each case by the image synchronous pulse (d), the pulse (g) coinciding with the centre of the line for one half image and with the line end for the other half image, in which the derived pulse (g) is produced from the image synchronous pulse (d) by a logic link with a pulse signal having twice the line frequency (c), which triggers the saw tooth generator (1).

Fig. 1

Fig.2